# EUROPEAN PATENT APPLICATION

(11) **EP 0 644 400 A2**
(43) Date of publication of application: **22.03.1995**
(21) Application number: 94810483.1
(22) Date of filing: 24.08.1994
(51) Int. Cl.: G01D 5/20, G01D 5/14, G01L 13/02, G01F 23/26

(54) **Method for determining the value of a physical variable and transducer according to the method**

(30) Priority: 26.08.1993 US 112563
(71) Applicant: Viatran Corporation, Grand Island, New York 14072 (US)
(72) Inventor: Moss, Robert A., Buffalo, New York 14213 (US)
(74) Representative: Roshardt, Werner Alfred, Dipl.-Phys.

(57) **Abstract**

A method for determining the value of a physical variable such as pressure, distance, volume or the like, comprises the following steps:
a) Generating a magnetic flux density distribution (44.1, 44.2) in a volume (42) filled with a ferrofluid (43);
b) changing the volume (42) responsive to the value of the physical variable;
c) measuring the variation of the flux density distribution (44.1, 44.2) which is caused by the change of the volume (2) in order to determine the value of the physical variable.

A differential pressure transducer according to the method uses a ferrofluid contained in two interconnecting chambers, enclosed by two non-magnetic spring diaphragms. At least one inductance circuit measures the variations in the volumes of ferrofluid in the interconnecting chambers. Changes in pressure displaces the non-magnetic spring diaphragms, causing the volume in each in the connecting chamber to change in a differential manner.

## Description

### Technical field of the invention

The invention relates to a method for determining the value of a physical variable such as pressure, distance, volume or the like. It also relates to a transducer according to that method.

### Background of the invention

Pressure transducers provide pressure measurements for many applications from scientific experiments to control of industrial systems and machines. In these applications, pressure changes need to be measured and converted into electrical signals representing the pressure changes. In some instances, a differential pressure transducer is used to detect pressure differences between two applied bias pressures. In many cases the media being measured is corrosive or conductive and requires a "wet/wet" differential pressure transducer. This type of transducer has two pressure ports which may be exposed to the process media without damage to the sensitive pressure measuring apparatus. The common technologies for measuring this phenomenon are capacitance or reluctance devices requiring complex alternating current electronics and multiple passive isolation diaphragms. Bonded foil strain gauge devices are also commonly used with passive isolation diaphragms, but are not practical for the low differential pressure ranges common in these applications.

U.S. Patent No. 4,462,259 describes a manometer type differential pressure gauge using a column of ferrofluid to act as the dielectric medium between two plates on either side of the column, forming a capacitor. The length of the ferrofluid in the column is dependent upon an applied pressure differential, so that the capacitance in the capacitor thus formed is dependent upon the applied pressure.

A magnetic field is used to act on the magnetic fluid to bias the slug of fluid toward the reference position. The magnetic field creates an additional force which adds to the gravitational forces acting on the magnetic field, a given column length of the magnetic liquid can represent a pressure differential which is larger than that obtained absent the application of the magnetic field.

This design, however, can only be used with clean gases, as the ferrofluid is exposed to the process medium. If high over-pressure situations develop, the ferrofluid could be expelled from the manometer tube. Devices made according to this design also require complex AC electronics to convert the differential column height of the ferrofluid to a useable electric signal.

U.S. Patent No. 4,788,867 describes a pressure transducer having a permanent magnetic "piston", suspended in a tube by a body of magnetic fluid. Pressure differentials applied to the tube cause the piston to move within the tube. A linear variable differential transformer (LVDT) measures the displacement of the piston. A second pair of cavities separate the magnetic fluid from the process media and provide over-pressure protection. The ferrofluid property is thus used to float a ferromagnetic material, acting as a frictionless seal for the magnetic piston. This moving piston has substantial mass and is therefore sensitive to gravitational effects.

U.S. Patent No. 3,956,938 discloses a pressure sensor utilizing a volume of ferrofluid, the volume being closed at one side by a spring diaphragm. The volume is open to a vertical pipe. The volume and part of the vertical pipe are filled with the ferrofluid. When pressure is applied to the diaphragm, a part of the ferrofluid is expelled from the volume into the vertical pipe. According to the applied pressure, the level of the ferrofluid in the vertical pipe or column varies. A coil is arranged around the column in such a way that the ferrofluid acts as a slug in a manner similar to a variable inductor with a ferrite tuning slug. A power coil arranged around the volume can be used for adjusting the level of the ferrofluid within the coil to a predetermined level (because the magnetic field of the power coil attracts the ferrofluid into the volume). The current applied to the power coil (for maintaining a specific fluid level in the column) indicates the amount of pressure applied to the spring diaphragm.

### Summary of the invention

It is an object of the present invention to provide a simple measuring method for determining the value of a physical variable such as pressure, force, distance, volume or the like.

A further object of the invention is to provide a transducer working according to the method of the invention.

A particular object of the invention is a simple differential pressure measuring instrument for corrosive wet/wet applications.

These goals are achieved by a method comprising the steps of
a) generating a magnetic flux density distribution in a magnetic circuit comprising a volume filled with a ferrofluid;
b) changing the volume responsive to the value of the physical variable; and
c) measuring in the magnetic circuit the variation of the flux density distribution which is caused by the change of the volume in order to determine the value of the physical variable.

By changing the volume of the ferrofluid, the magnetic field flowing through the volume is restricted or increased responsive to the changes of the physical variable. In order to determine e. g. a change of a distance, a piston device could be used to reduce or enlarge the volume of the ferrofluid that is conducting the magnetic flux. In a similar way changes of a volume can be determined. In order to determine a pressure value, the volume can be defined by a container with a flexible wall (e. g. a spring diaphragm) responsive to pressure variations. If the pressure is high, the volume of ferrofluid is reduced, whereas a low pressure increases the volume. It is of course also possible to implement an "inverse effect measuring method", in which the volume of ferrofluid increases with increasing pressure and vice versa.

It is important to note that the flux density distribution can also be changed in response to changes of the shape of the volume of ferrofluid. The invention relates to any sort of volume variation that leads to a change of the flux density distribution in the magnetic circuit. Further more, any physical variable that can be used to change the volume can be determined according to the invention (such as force, thermal expansion etc.).

A transducer according to the invention comprises
a) a magnetic circuit comprising
   a1) a volume containing a ferrofluid, the volume being responsive to changes in the value of the physical variable,
   a2) magnet means for generating magnetic flux in the volume and
b) flux density sensing means for measuring the variation of the flux density distribution which is caused by the change of the volume in order to determine the value of the physical variable.

Preferably, the volume is defined by at least one containment means with at least one spring diaphragm to be exposed to the pressure or the influence of another physical variable. The diaphragm allows a separation of the ferrofluid from process media. It is also possible to have a piston-like element act on the diaphragm for changing the volume responsive to the position of the piston in order to determine displacements, forces, thermal expansion and the like).

A particularly preferred embodiment is characterized by two containment means connected to each other for allowing flow of the ferrofluid from one containment means to the other, each of the containment means defining a volume responsive to pressure changes. Such a device therefore allows a differential measurement (e. g. differential pressure).

According to a first embodiment, each of the two volumes (i.e. containment means) is part of a separate closed magnetic circuit. Two flux density sensing means generate two magnetic signals according to the flux density distribution in each of the two volumes. The pressure difference is determined by comparing the two electrical signals.

In a second embodiment, the two volumes i.e. containment means are part of a symmetric closed magnetic circuit of the Wheatstone bridge type. The changes in the magnetic flux distribution can be detected by just one sensor. The sensor already performs a differential detection. No comparison of electrical signals is needed.

A magnetic Wheatstone bridge can be implemented by means of a ferromagnetic X-shaped bridge element, two permanent magnets being inserted between neighboring ends of the bridge element in a symmetric position and two volumes containing the ferrofluid being inserted between the remaining open sides of the bridge element. The flux density sensor is arranged in the center of the bridge element. Changes of the volumes entail changes of the flux density distribution in the circuit and particularly at the center of the bridge element.

The magnetic circuit may comprise a small non-magnetic gap (e. g. by interposing a separating member or wall), the flux density sensor being arranged neighboring to the gap. The gap makes sure that the magnetic circuit and the ferrofluid are separated. Preferably the gap is as small as possible, since it is detrimental to a high magnetic flux.

In order to avoid unwanted temperature effects, the magnetic flux in the ferrofluid is in the saturation region. The volume of ferrofluid has therefore the effect of a variable reluctance in the magnetic circuit. Reducing the volume (i. e. the cross section of the reluctance path) reduces the flux density in the magnetic circuit.

Fill tubes for filling the ferrofluid into the containment means may consist of a magnetic material and form a part of the magnetic circuit.

In order to more easily detect changes of the flux distribution, the flux density sensor may be arranged eccentrically with respect to the flux density distribution. At eccentric positions, the changes in the magnetic field are more pronounced than in the center. The flux density sensor is preferably a Hall effect sensor. Magnetoresistors may also be used.

Additionally preferred embodiments may be characterized as follows.

A differential pressure transducer for measuring external pressure may comprise according to the invention
a) first and second containment means for containing a ferrofluid, said containment means responsive to changes in pressure applied to said containment means;
b) a ferrofluid distributed within said containment means;
c) interconnection means between said first and second containment means for allowing flow of said ferrofluid in response to changes in pressure applied to said containment means;
d) magnet means in magnetic contact with said ferrofluid for producing a magnetic field;
e) sensing means for determining changes in the flux density of said magnetic field in response to changes in ferrofluid distribution caused by pressure applied to said containment means.

The transducer may further comprise a non-magnetic body member which contains said interconnection means, said magnet means and said sensing means. The containment means are mounted in a symmetrical position on the non-magnetic body member.

The non-magnetic body member preferably comprises a filling means for filling said first and second containment means with said ferrofluid. Said filling means comprises at least one fill tube and at least one sealing means for sealing said at least one fill tube. Additionally, the transducer may comprise shielding means for protecting said sensing means from magnetic signals external to said pressure transducer. The shielding means comprises preferably pressure ports for transmitting external pressures to be measured to said first and second containment means and at least one end cap enclosing both said non-magnetic body member and said first and second containment means, said end cap fitted to said pressure ports. The shielding means is preferably made of corrosion resistant ferromagnetic material.

In a preferred embodiment, said first and second containment means are comprised of first and second opposing diaphragms, attached to opposite sides of said non-magnetic body member, said first diaphragm adapted to compress towards said non-magnetic body member when an external pressure is applied to said first diaphragm, said compression of said first diaphragm producing a transfer of ferrofluid contained in said first containment means through said interconnection means and into said second containment means, increasing the volume of ferrofluid in said second containment means, and producing a corresponding extension of said second diaphragm. In this embodiment, the differential pressure between the first and the second containment means is measured.

It is recommended that the diaphragms be made of a non-magnetic material with a high yield strength such as Inconel X750.

The magnet means (i.e. the magnetic circuit) may comprise at least one magnetic assembly having a permanent magnet connected to a ferromagnetic keeper connected to a ferromagnetic flow tube, creating a series magnetic circuit with each of said first and second volumes (defined by the containment means) of ferrofluid.

The sensing means of the pressure transducer may comprise at least one Hall effect sensor having a measurement range bounded by a minimum and a maximum value adapted to produce a signal corresponding to a change in flux density resulting from the movement of said ferrofluid from said first containment means to said second containment means.

Said at least one Hall effect sensor is preferably positioned where the flux density at the center of said Hall effect sensor is biased toward the midpoint of the maximum value of said Hall effect sensor when said first and second containment means contain substantially equal amount of ferrofluid.

Alternatively the Hall effect sensor may be positioned where the flux density at the center of said Hall effect sensor is biased toward the midpoint of the maximum value of said at least one Hall effect sensor at initial condition, prior to the application of an external pressure to said first and second containment means.

The ferrofluid should have a high magnetic saturation, e. g. of 600 Gauss. Furthermore, it is advantageous if the ferrofluid has a low viscosity.

A differential pressure transducer according to a very specific embodiment of the invention comprises:
a) A body member having at least a first and a second outside wall;
b) first and second magnetic assemblies located within said body member, each of said magnetic assemblies comprised of a permanent magnet, magnetic keeper and magnetic fill tubes, said permanent magnets producing a magnetic field having a flux density;
c) first and second non-magnetic, spring diaphragms, each capable of displacement by an external pressure;
d) first and second reservoirs formed by said first and second spring diaphragms and said first and second outside wall, respectively;
e) a ferrofluid contained within said first and second reservoirs and in magnetic contact with said magnetic assemblies;
f) a passage connecting said first and second reservoirs allowing said ferrofluid to flow between said first and second reservoirs in relation to said displacement of said first and second diaphragms by an external pressure; and
g) first and second Hall effect sensors located within said body member and enclosed by said magnetic assemblies, said Hall effect sensors adapted to produce electrical signals corresponding to changes in said flux density resulting from the flow of ferrofluid when said first and second diaphragms are displaced by an external pressure.

The embodiments have many advantages, amoung which the following are of special interest:
The present invention provides a high level d.c. signal using one or two Hall effect sensors. No other discrete electronic components are required.

The present invention further provides high voltage isolation from case ground due to the high breakdown voltage of the Hall effect sensors. Furthermore, the sensors are physically isolated from the ferrofluid and the process media, such that failure of the active diaphragms will not permit the process media to make contact with the electrical system. These characteristics make this device ideally suited for operating in hazardous locations.

The present invention provides a simple construction due to the use of a ferrofluid. This ferrofluid acts as a pressure transfer media, a variable reluctance mechanism and a spring element due to ferrohydrodynamic effects.

The present invention uses a ferrofluid as a variable reluctance mechanism. Ferrofluids exhibit superparamagnetic behavior when exposed to magnetic fields. Superparamagnetic fluids do not exhibit hysteresis in changing magnetic fields, nor do they agglomerate when exposed to a steady state magnetic field due to Brownian motion of the magnetic particles. Both of these characteristics are common to simple ferromagnetic fluids that do not exhibit superparamagnetism. Hysteresis and agglomeration are detrimental characteristics for a measuring instrument as herein disclosed.

The sensing system of the present invention is a series magnetic circuit comprising a permanent magnet in series with a Hall effect sensor, in series with the variable volume of ferrofluid. Hall effect sensors are devices which provide a d.c. voltage proportional to the applied magnetic field strength.

The present invention requires large displacement of the force collecting spring diaphragms relative to other techniques used in the measurement of differential pressure. This has advantages in manufacturing the transducer. The diaphragms in the preferred embodiment are designed to displace 0.020" (≈ 0.5 mm) over the intended pressure range. This is in contrast to 0.00001" (≈ 2.5 µm) deflection for silicon sensor technology and up to 0.004" (≈ 0.1 mm) deflection for capacitance technology. The large deflection of the present invention results in a sensor which does not require high tolerance assembly techniques. Minor variances in the assembly of these sensors will not have significant effects on overall performance characteristics.

### Brief description of the drawings

The following serve as non-limiting examples of the present invention in which:
- Fig. 1: is a cut-away view of an exemplary differential pressure transducer according to the present invention;
- Fig. 2: is a cut-away view of a magnetic circuit used in the differential pressure transducer shown in Fig. 1;
- Fig. 3: is a section A-A of the differential pressure transducer shown in Fig. 1;
- Fig. 4: is an alternative embodiment of a differential pressure transducer of the present invention;
- Fig. 5: is a cut-away view of the magnetic circuit of the differential pressure transducer shown in Fig. 4;
- Fig. 6: is an illustration of the flux density in an exemplary embodiment of the present invention where the differential pressure is zero;
- Fig. 7: is an illustration of the change in flux density in an exemplary embodiment of the present invention where a pressure P1 is greater than a pressure P2;
- Fig. 8a, b: is an illustration of the basic principle of the invention;
- Fig. 9a, b: is a schematic illustration of an embodiment, using a piston for changing the volume;
- Fig. 10: is a perspective view of a Wheatstone bridge type transducer.

### Detailed description

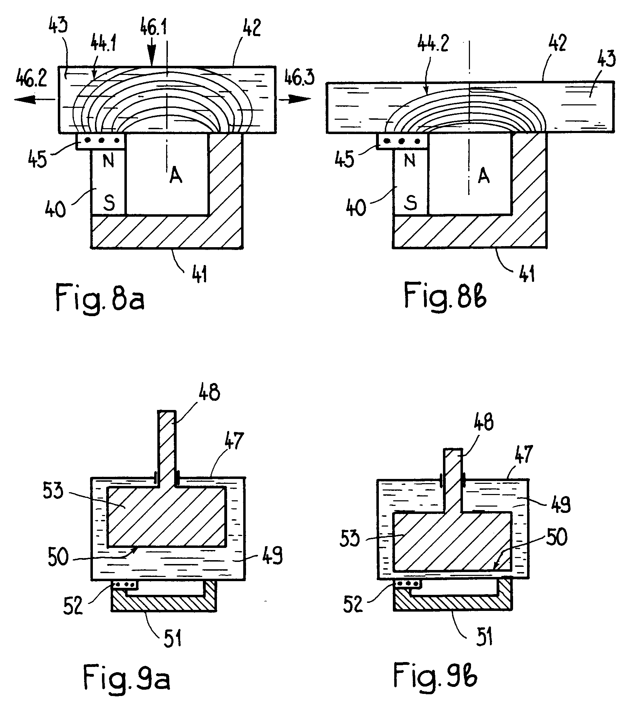

Before describing the construction of the preferred embodiments, the principle of the invention shall be explained by means of Fig. 8a, b. A magnetic circuit is comprised of a permanent magnet 40, a L-shaped element 41 of magnetic material, a volume 42 containing a magnetic fluid 43 (ferrofluid) and a Hall effect sensor 45 eccentrically positioned between one end of the permanent magnet 40 and the volume 42.

The magnet 40 generates a magnetic field 44.1, 44.2 (illustrated by field lines) in the ferrofluid 43.

Depending on the shape of the volume 42 containing the magnetic fluid 43 in the region of the permanent magnet 40 and the element 41, there is a flux distribution in the fluid 43 and in the Hall effect sensor 45 that leads to a certain electrical signal of the Hall effect sensor 45.

When changing the volume 42 of Fig. 8a as indicated by the arrows 46.1, 46.2, 46.3 into the shape of Fig. 8b, the cross section along line A also changes its shape. The change will of course also influence the distribution of the magnetic flux (in the present example it may become less dense). The change in the flux density distribution leads to a different signal of the Hall effect sensor 45.

By gauging the change of the electrical signal on the basis of the change of the volume any physical variable can be measured that can generate a change of the volume 42. As disclosed below, the volume change can be produced e. g. by a pressure acting on a spring diaphragm or by a moving piston.

Fig. 9a, b diagrammatically shows a particular way of changing the volume of ferrofluid. A container 47 is filled with ferrofluid 49. A piston 48 with a (non-magnetic) body 53 is displaceably mounted in the container 47. At the bottom of the container 47, opposite to the lower face 50 of the body 53, there is a permanent magnet 51 and a Hall effect sensor 52. On the basis of the principle shown in Fig. 8a, b it is evident that moving the piston 48 from the position shown in Fig. 9a into the position of Fig. 9b changes the (shape of the) volume of ferrofluid 49 and therefore produces a change in the flux density distribution as detected by the Hall effect sensor 52.

The embodiment shown in Fig. 9a, b may be used to measure a distance (i.e. displacement) or any other physical variable, the variation of which can be transferred into a displacement of the piston 48. E. g. the thermal expansion of a material or medium acting on the piston 48 may be measured in order to determine the variation of temperature. Volume changes and other physical variables may be determined on the basis of the principle of the invention.

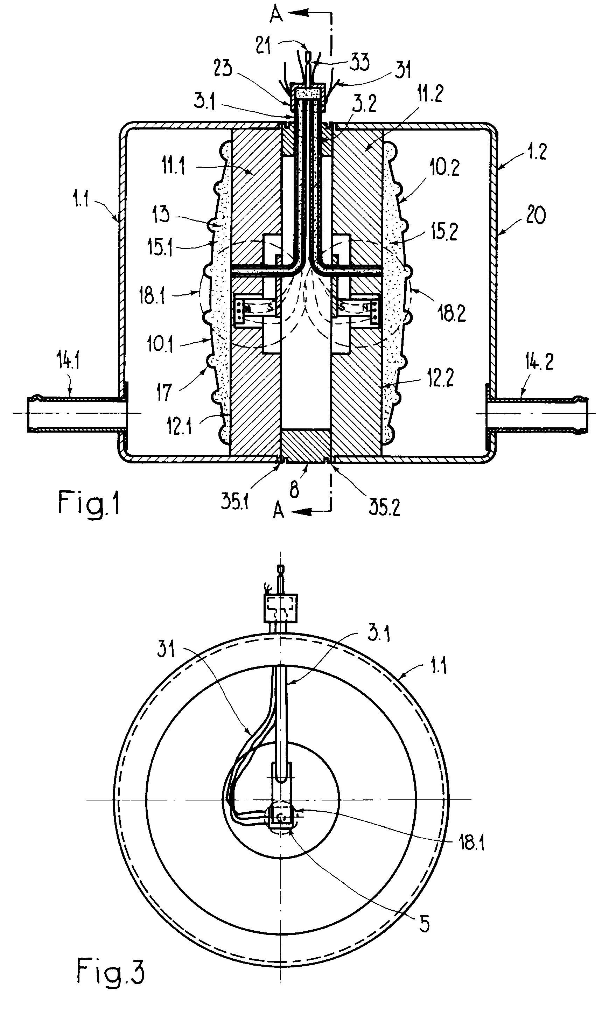

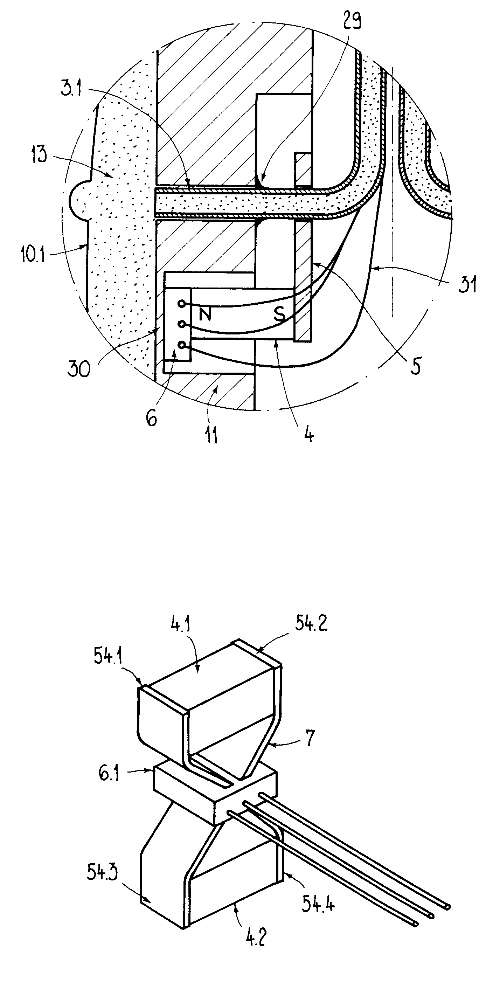

There is shown in Fig. 1 an exemplary embodiment of a differential pressure transducer 20 constructed in accordance with the present invention. Differential pressure transducer 20 comprises a pair of end caps 1.1, 1.2 and a spacer 8, with both end caps 1.1, 1.2 and spacer 8 made of a ferromagnetic material having good corrosion resistance. This material must be compatible for welding 35.1, 35.2 with the material of the bodies 11.1, 11.2 mounted in the end caps 1.1, 1.2. End caps 1.1, 1.2 provide support for pressure ports 14.1, 14.2, as well as a means for shielding against magnetic noise, external to a differential pressure transducer 20. Pressure ports 14.1, 14.2 in differential pressure transducer 20 should be located to provide optimum isolation of the magnetic circuits 18.1, 18.2 from factors such as external magnetic noise and effects from ferromagnetic components such as interconnecting pipes and tubes.

Two interconnected volumes of ferrofluid 13 are contained in reservoirs 15.1, 15.2. Reservoirs 15.1, 15.2 serve as first and second containment means uses for containing the ferrofluid 13. Each of the two reservoirs 15.1, 15.2 are formed by their respective spring diaphragm 10.1, 10.2 and side 12 of bodies 11. A connecting passage is comprised of two ferromagnetic fill tubes 3.1, 3.2, a fill coupling 23. The connecting passage serves as interconnection means between reservoirs 15.1, 15.2 and allows the flow of the ferromagnetic fluid from one chamber 15.1 into the other 15.2, depending upon the pressure being asserted against diaphragms 10.1 and 10.2 through pressure ports 14.1, 14.2 of differential pressure transducer 20. A fill tube 21 is used for filling both tubes 3.1, 3.2 (connecting passage) with ferrofluid 13. Ferromagnetic tubes 3.1, 3.2 also act as magnetic circuit elements in the magnetic sensing circuit.

In the exemplary embodiment shown in Fig. 1, tubes are solder connected via silver solder to fill coupling 23, which allows for filling, under vacuum, of the two reservoirs 15.1, 15.2 with the ferrofluid 13 and allows flow from one reservoir 15.1, 15.2 to the other 15.2, 15.1. Those skilled in the art will understand other methods of connecting tubes 3.1, 3.2 to fill coupling 23. A fill tube 21 facilitates filling and provides a surface appropriate for a sealing method such as ultrasonic welding 33 which serves as a sealing means for sealing fill tube 21. More than one fill tube could be used for reservoirs 15.1, 15.2 with ferrofluid 13. The incompressibility of the ferrofluid 13 and the resilience of the fill system enable the spring diaphragms 10.1, 10.2 to withstand high base pressures relative to the differential pressure applied.

The change in the reluctance path is dependent upon the displacement of the volume of ferrofluid 13. This displacement is dependent upon the deformation displacement of spring diaphragms 10.1, 10.2. The displacement of spring diaphragms 10.1, 10.2 in the exemplary embodiment required is large relative to conventional transducer techniques. Spring diaphragms 10.1, 10.2 are designed for large displacement using semicircular convolutes 17. Diaphragms 10.1, 10.2 are formed into configurations shown so as to collapse against outside wall 12.1, 12.2 of bodies 11.1, 11.2 in a continuous, uniform manner, such that semicircular convolutes 17 retain their shape. In this collapsed position, semicircular convolutes 17 are structurally resistant to yielding from the effects of high overload pressures. Spring diaphragms 10.1, 10.2 should be made of a non-magnetic material with a high yield strength. Inconel X750™ is a high strength, nickel superalloy which can be heat-treated and has low permeability. Heat-treating also tends to reduce residual stress caused by forming, which improves the dimensional stability of the diaphragms. Other suitable materials for the construction of spring diaphragms 10.1, 10.2 will be understood by those skilled in the art.

As pressure is applied through one of the pressure ports 14.1, 14.2, the corresponding spring diaphragm 10.1, 10.2 is compressed, forcing ferrofluid 13 through connecting passage from the corresponding reservoir e. g. 15.1 into the opposite reservoir e. g. 15.2, thereby expanding the opposite spring diaphragm 10.2. This change in distribution of ferrofluid 13 is detected and measured by magnetic circuits 18.1, 18.2 which contain the sensing means of the present invention.

Fig. 2 shows a detailed view of the series magnetic circuit 18.1 of Fig. 1. A similar circuit 18.2 is used on the other side of differential pressure transducer 20 in the exemplary embodiment shown in Fig. 1. Magnetic circuit 18.1 is made up of a permanent magnet 4, a linear Hall effect sensor 6, a non-magnetic gap 30, a variable quantity of ferrofluid 13, a ferromagnetic tube 3.1 and a ferromagnetic keeper 5. This closed series magnetic circuit 18.1 comprises the magnetic sensor of the invention (with magnet 4 serving as the magnet means). One sensor assembly (magnetic circuit 18.1, 18.2) is oriented with each diaphragm 10.1, 10.2. As pressure is applied, one volume of ferrofluid increases while the other decreases, creating a differential effect. This arrangement reduces errors due to nonlinearity, temperature and other common mode errors. Fill tube 3.1 is brazed to body 11.1 at braze 29. Other methods of attachment will be understood by those skilled in the art. All other components of the series magnetic circuit are bonded together. Wires 31 from Hall effect sensor 6 are exited through spacer 8 with ferromagnetic tube 3.1 (see Fig. 1).

There is shown in Fig. 2 a cut-away magnified view of magnetic circuit 18.1. Magnetic circuit 18.1, shown in Fig. 2, includes a soft steel fill tube 3.1 and keeper 5. Magnet 4 is made of Alnico #8, a highly stable permanent magnetic material in the exemplary embodiment. Other suitable permanent magnetic materials will be understood by those skilled in the art. The magnetic saturation of ferrofluid 13 of the present embodiment is 600 Gauss. Hall effect sensor 6 is a Sprague part #UGN3503U in the exemplary embodiment.

The Hall effect sensor 6 is oriented outside the center of the circuit. This orientation has been found to be the location where flux densities varied the greatest with given changes in ferrofluid depth in this particular circuit design. Other placements of Hall effect sensor 6 are possible, depending upon specific applications and/or design requirements.

Electromagnetic Finite Element Analysis is suggested to optimize the performance of each configuration. Parameters effecting performance include: magnet size and shape, magnet material BH curve, Hall effect sensor operating range, ferrofluid BH curve and Ms max., air gap, change in ferrofluid depth, pole piece BH curve and geometry of the series circuit. Finite element analysis technique can also be used to analyze the nonlinearity and temperature performance effects. Many specialized ferromagnetic materials are available which change magnetic properties with temperature. These materials can be selected to compensate for changes in sensor output due to temperature variances. These materials will be familiar to those skilled in the art.

Magnetic circuit 18.1, 18.2 must be carefully designed to take advantage of the limited susceptibility of ferrofluid 13 and operate linear Hall effect sensors 6 within the effective flux density range. A design objective is to achieve the largest change in flux density in the series magnetic circuit 18.1, 18.2 for a given change in ferrofluid volume, with a small bias flux density, while maintaining reasonable temperature stability. Large bias flux densities cause the series magnetic circuit 18.1, 18.2 to be insensitive, but small bias flux densities do not saturate ferrofluid 13 adequately to reduce susceptibility sensitivity to temperature changes. The ferrohydrodynamic properties of ferrofluid 13 being acted on by a magnetic field will also be minimized by keeping the bias flux density small.

The relative susceptibility of the volume of ferrofluid 13 versus the volume of air (or process fluid) in the series induction path, determines the output capability of the transducer. The susceptibility of ferrofluid 13 is a function of the applied magnetic field and the fluid temperature.

Assuming a parallel, linear magnetic field (H) is applied to a gap filled with a mixture of ferrofluid and air, the magnetic induction (B) in the gap can be described by the following equation:

$\text{B = H + q * (Ms * (1-(k/m) * (T/H))}$
$\text{: q<=1.}$
$\text{: (k/m) * (T/H) << 1.}$

where:
- q :: the fraction of ferrofluid area to the total area of the inductance path
- Ms:: magnetic saturation of the ferrofluid
- m :: magnetic dipole moment of the particles
- T :: temperature in Kelvin
- k :: Boltzmann's constant
- H :: applied magnetic field
- B :: magnetic induction in the gap

The above equation is derived and simplified from equations taken from "Ferrohydrodynamics" by Rosensweig, Cambridge University Press, which is incorporated herein by reference. It describes the macro characteristics of ferrofluid acted on by a linear field. Ms and m are constants of a given ferrofluid. When designing series magnetic circuit 18.1, 18.2, the objective is to select H to maximize variations in B due to q and minimize variations in B due to changes in T. The exemplary embodiment exposes the ferrofluid to a gradient magnetic field, so an average optimal H should be considered.

The present invention allows for conversion of differential pressures into electrical signals as an integral part of the design. Hall effect sensors 6 will output an electrical signal proportional to the change in flux density which is, in turn, proportional to the pressure differential between two pressures applied to corresponding pressure ports 14.1, 14.2.

Further, the mass of ferrofluid 13 volume used is small relative to the spring force of spring diaphragms 10.1, 10.2, thus effects of inclination are minimal. Gravitational effects acting on the small mass of ferrofluid 13 are inconsequential relative to the reaction forces of spring diaphragms 10.1, 10.2. The body forces due to the magnetic field acting on the volume of ferrofluid 13 combine with the spring forces to maintain ferrofluid 13 in a reference position.

The present invention also contains no moving parts other than the deformation displacement of spring diaphragms 10.1, 10.2. Induction imbalances occur due to the flow of ferrofluid 13. Ferrofluid 13 serves as a measurand, pressure transfer media, and stabilizing agent to create an efficient design.

Fig. 3 is a sectional view A-A of differential pressure transducer 20 shown in Fig. 1. It is evident that the transducer has a circular or cylindrical shape and that the Hall effect sensor 6 is placed near the center of the circular or cylindrical shape. Other shapes and dimensions can be used depending upon the application for which a differential pressure transducer 20 is being used.

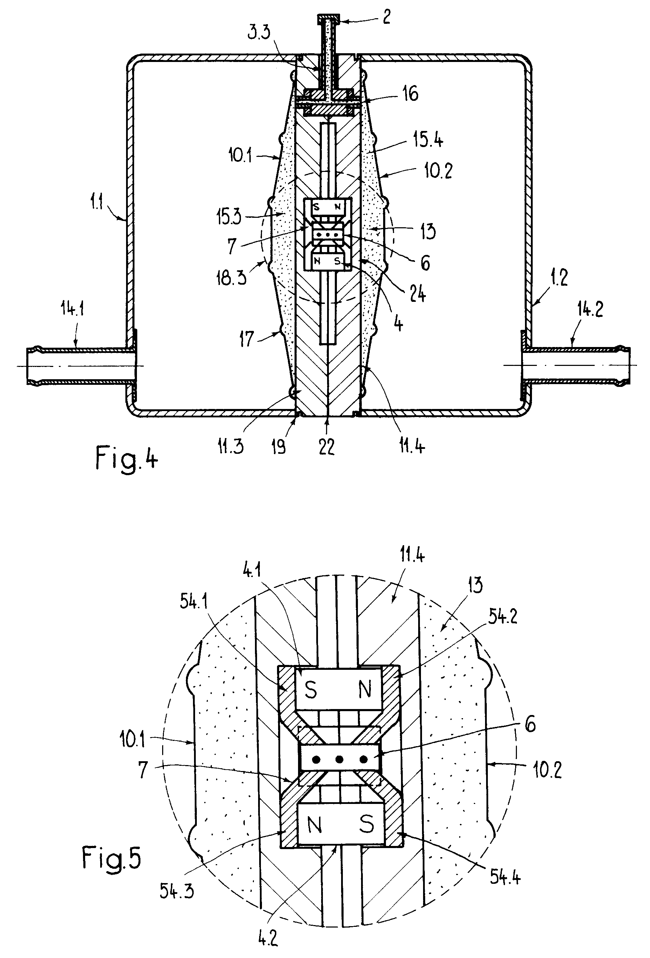

There is shown in Fig. 4 an additional embodiment of differential pressure transducer 20. In this embodiment, fill tube 3.3 is a single fill tube sealed with an end cap 2. A straight connecting passage 16 connects reservoirs 15.3, 15.4, without the U-shaped path of fill tubes 3.1, 3.2 shown in Fig. 1. The fill tube 3.3 is connected to the passage 16.

Two identical bodies 11.3, 11.4 are connected to each other by a weld 22, without the need for spacer 8 shown in Fig. 1. There is a magnetic circuit 18.3 at the center of the transducer. When differential pressure is applied to pressure ports 14.1, 14.2, ferrofluid 13 can flow freely between reservoirs 15.3, 15.4 through connecting passage 16, depending on the size of the pressure differential. The flow of the fluid is similar to that of Fig. 1 however the magnetic circuit 18.3 is different.

The diaphragms 15.3, 15.4 are similar in size and construction to diaphragms 15.1, 15.2 of Fig. 1 (this is particularly true for the semicircular convolutes 17, the yield of the material etc.). The ports 14.1, 14.2 as well as the end caps 1.1, 1.2 for letting in and receiving the fluid the pressure of which is acting on the diaphragms 10.1, 10.2 may be identical in construction to Fig.1.

Fig. 5 shows a cut-away magnified view of magnetic circuit 18.3 of the embodiment shown in Fig. 4. Magnetic circuit 18.3 of this embodiment shows a permanent magnetic bridge 7 comprised of two magnets 4.1, 4.2 affixed in opposing directions (see Fig. 10). This arrangement reduces errors due to nonlinearity, temperature effects and also provides a true differential signal. Also, common mode errors are reduced.

Permanent magnetic bridge 7 is designed to use a full applicability of Hall effect sensor 6 by creating a null flux density condition at Hall effect sensor 6 when an equal induction is applied to both sides of permanent magnetic bridge 7. Using high energy permanent magnets 4.1, 4.2, a suitable sensitive permanent magnetic bridge 7 can be realized.

As shown in Figs. 5 and 10, the magnetic circuit is of the type of a Wheatstone bridge. The bridge 7 has an X-shape, the two magnets 4.1, 4.2 being inserted between two neighboring or facing ends 54.1 and 54.2; 54.3 and 54.4 of the X-shaped bridge 7. At the center or crossing of the magnetic bridge 7, the Hall effect sensor 6.1 is arranged in a symmetric position.

Immediately adjacent to the ends 54.1, 54.3 and 54.2, 54.4 are the two volumes of ferrofluid bounded by the diaphragms 10.1, 10.2 respectively. In the embodiment of Fig. 4 and 5 there is a gap between the magnetic bridge 7 and the ferrofluid, the gap being a part of the bodies 11.3, 11.4.

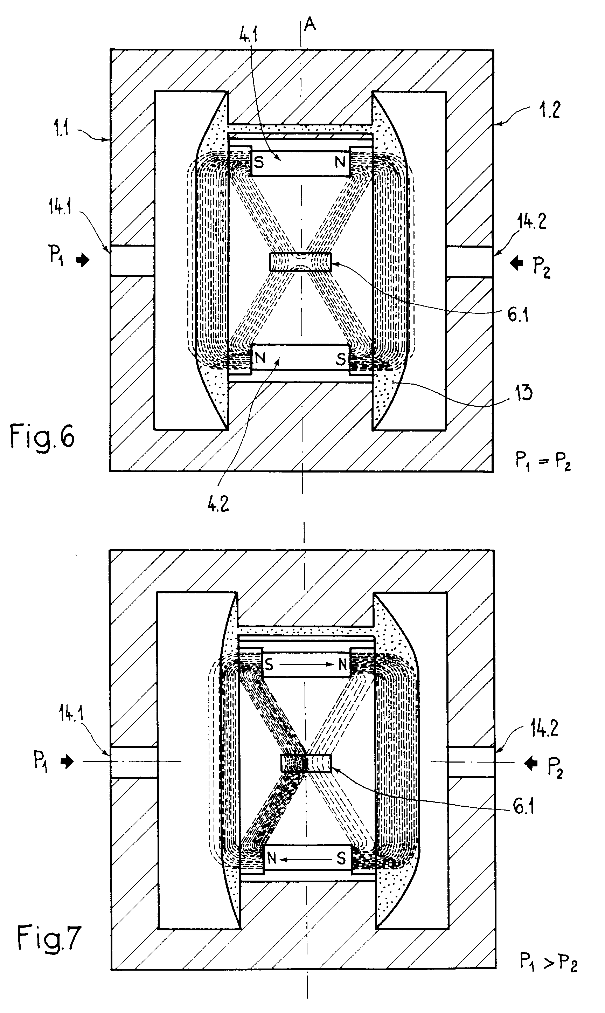

The magnetic flux generated by the two magnets 4.1, 4.2 is to a certain amount in the bridge 7 and to a remarkable part in the ferrofluid 13 laterally neighboring to the magnetic bridge 7 (see Fig. 6). The magnetic flux therefore changes responsive to changes of the volume in the immediate vicinity of the permanent magnetic bridge 7. The flux density distribution and the change will be explained below.

Referring back to Fig. 1, wires 31 from Hall effect sensor 6 are led out of differential pressure transducer 20 with fill tubes 3.1, 3.2.

Figs. 6 and 7 show a schematic diagram of the distribution of the reluctance path of ferrofluid and that of the pole pieces (flux concentrators). Fig. 6 shows a case where pressure P1 is equal to a pressure P2. As can be seen, pressure P1 and pressure P2 are applied to their respective pressure ports 14. The reluctance path as shown by the dotted lines is evenly distributed on either side of reference line A. In Fig. 7, however, pressure P1 is greater than pressure P2. Diaphragms 10.1, 10.2 displace until an equilibrium position is reached. The volume of ferrofluids 13 on the P1 side of reference line A is reduced, causing the flux density through the pole pieces 5 on the P1 side to increase. The opposite situation occurs on the P2 side of reference line A as the flux density through the respective pole pieces decreases. Fig. 7 illustrates the shifting of the flux pattern at the center of the permanent magnetic bridge such that the magnetic field strength is increased at the center of Hall effect sensor 6.1, producing a proportional electrical signal.

The important features of the disclosed differential pressure transducer for measuring external pressures can be summarized as follows. The pressure transducer uses a ferrofluid contained in two interconnecting chambers, enclosed by two non-magnetic spring diaphragms. In this embodiment, two independent inductance series circuits, each comprising a bar magnet, Hall effect sensor and an iron pole piece, measure variations in the volume of ferrofluid in each of the interconnecting chambers. Changes in pressure displace the non-magnetic spring diaphragms causing the volume in each interconnecting chamber to change in a differential manner. The flux path in the series magnetic circuit is distorted by changes in the volume of the ferrofluid, causing changes in the flux density at the sensing area of the Hall effect sensor, this sensor producing an electrical signal proportional to the flux change. The differential output of the Hall effect sensors contained in the series magnetic circuits produce an electrical signal proportional to the applied differential pressure.

The present invention has been described in terms of exemplary embodiments. It is contemplated however that it may be practiced with modifications, some of which are outlined above, within the scope of the appended claims.

## Claims

1. Method for determining the value of a physical variable such as pressure, distance, volume or the like, comprising the steps of
a) generating a magnetic flux density distribution (44.1, 44.2) in a magnetic circuit comprising a volume (42; 47; 15.1, 15.2; 15.3, 15.4) filled with a ferrofluid (43; 49; 13);
b) changing the volume (42; 47; 15.1, 15.2; 15.3, 15.4) responsive to the value of the physical variable;
c) measuring in the magnetic circuit the variation of the flux density distribution (44.1, 44.2) which is caused by the change of the volume (42; 47; 15.1, 15.2; 15.3, 15.4) in order to determine the value of the physical variable.

2. Transducer for determining the value of a physical variable such as pressure, distance, volume or the like, comprising
a) a magnetic circuit comprising
a1) a volume (42; 47; 15.1, 15.2; 15.3, 15.4) containing a ferrofluid (43; 13), the volume (42) being responsive to changes of the value of the physical variable,
a2) magnet means (40; 51; 4; 4.1, 4.2) for generating a magnetic flux in the volume (42; 47; 15.1, 15.2; 15.3, 15.4),
b) flux density sensing means (45; 52; 6; 6.1) for measuring the variation of the flux density distribution which is caused by the change of the volume (42; 47; 15.1, 15.2; 15.3, 15.4), in order to determine the value of the physical variable.

3. Transducer according to claim 2, wherein the volume (15.1, ... 15.4) is bounded by at least one containment means with at least one spring diaphragm (10.1, 10.2) to be exposed to pressure.

4. Transducer according to claim 3, characterized by two containment means (15.1, 15.2; 15.3, 15.4) connected (3; 16) to each other for allowing flow of the ferrofluid (13), each of the containment means (15.1, 15.2; 15.3, 15.4) bounding a volume responsive to pressure changes and therefore allowing differential measurement.

5. Transducer according to claim 4, wherein each of the two volumes (15.1, 15.2) is part of a separate closed magnetic circuit (18.1, 18.2).

6. Transducer according to claim 4, wherein the two volumes (15.3, 15.4) are part of one symmetric magnetic circuit (18.3), preferably of the Wheatstone bridge type.

7. Transducer according to claim 6, wherein the magnetic circuit comprises two permanent magnets (4.1, 4.2), a magnetic X-shaped bridge element (7) interconnecting the permanent magnets (4.1, 4.2) and the two volumes, the flux density sensor (6.1) being arranged at the center of the bridge element (7).

8. Transducer according to one of claims 2 to 7, wherein the magnet means are such, that the magnetic flux density in the volume of ferrofluid is in the saturation region.

9. Transducer according to one of claims 3 to 8, characterized by fill tubes (3.1, 3.2) for filling the ferrofluid (13) into the containment means (15.1, 15.2), the fill tubes (3.1, 3.2) being part of the magnetic circuit (18.1, 18.2).

10. Transducer according to one of claims 8 or 9, wherein the flux density sensor (6) is arranged eccentrically with respect to the flux density distribution.

11. Transducer according to one of claims 2 to 10, wherein the flux density sensor (6; 6.1) is a Hall effect sensor.

12. Differential pressure transducer according to the method of claim 1, for measuring external pressures comprising:
a) First and second containment means (15.1, 15.2; 15.3, 15.4) for containing a ferrofluid (13), said containment means (15.1, 15.2; 15.3, 15.4) responsive to changes in pressure applied to said containment means (15.1, 15.2; 15.3, 15.4);
b) a ferrofluid (13) distributed within said containment means (15.1, 15.2; 15.3, 15.4);
c) interconnection means (3.1, 3.2, 23; 16) between said first and second containment means (15.1, 15.2; 15.3, 15.4) for allowing flow of said ferrofluid (13) in response to changes in pressure applied to said containment means (15.1, 15.2; 15.3, 15.4);
d) magnet means (4; 4.1, 4.2) in magnetic contact with said ferrofluid (13) for producing a magnetic field;
e) sensing means (6; 6.1) for determining changes in the flux density of said magnetic field in response to changes in ferrofluid (13) distribution caused by pressure applied to said containment means (15.1, 15.2; 15.3, 15.4).
